# EUROPEAN PATENT APPLICATION

(11) **EP 0 551 879 A2**
(43) Date of publication of application: **21.07.1993**
(21) Application number: 93100406.3
(22) Date of filing: 13.01.1993
(51) Int. Cl.: G11B 11/10

(54) **Magnetic head for magnetooptical recording and a method of manufacturing the same**

(30) Priority: 14.01.1992 JP 23361/92; 14.01.1992 JP 23362/92; 30.10.1992 JP 352768/92
(71) Applicant: SONY CORPORATION, Tokyo 141 (JP)
(72) Inventor: Nanjyo, Shinichi c/o Sony Corporation, Shinagawa-ku, Tokyo (JP)
(74) Representative: Müller, Frithjof E., Dipl.-Ing.

(57) **Abstract**

A magnetic head for magnetooptical recording comprises a magnetic head unit (11) with a bobbin (12), a coil (13) formed on the bobbin (12) and a magnetic core (14) inserted in the bobbin (12), and a support member (15) having - in an integral unit - a pair of parallel support arms (16) and a pair of projections (17) projecting toward each other respectively from the respective inner sides of the pair of parallel support arms (16). In manufacturing the magnetic head, the support member (16) is formed by pressing or etching a metal plate, the support member (16) and the bobbin (12) are combined by insert molding so that the projections are buried in the bobbin (12), the coil (13) is formed on the bobbin (12), the magnetic core (14) is attached to the bobbin (12). Terminals (18) connected to the opposite ends of a wire forming the coil (13) are formed integrally with the pair of parallel support arms (16) or combined with the bobbin (12) by insert molding. Thus, the number of the component parts of the magnetic head is smaller than that of the components of the prior art magnetic head. The magnetic head can be assembled by a simple assembling process in high accuracy and can be manufactured at manufacturing cost lower than that required for a prior art magnetic head.

## Description

### BACKGROUND OF THE INVENTION

### Field of the Invention

The present invention relates to a magnetic head for magnetooptical recording and a method of manufacturing the same.

### Description of the Prior Art

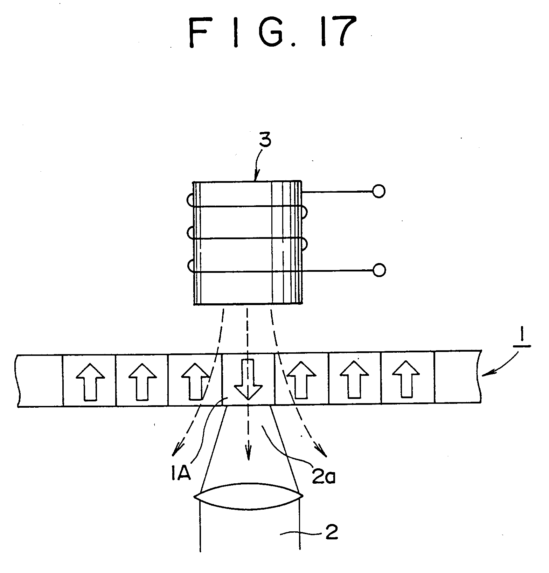

Fig. 17 shows a magnetooptical recording system of a magnetic modulation type which enables overwriting, namely, writing new signals on previously recorded signals on a magnetooptical disk. This magnetooptical recording system disposes an optical pickup that projects a laser beam 2 on one side of a magnetooptical disk 1, i.e., a magnetooptical recording medium provided with a magnetooptical recording layer formed of a perpendicularly magnetizable film, disposes a magnetic head 3, i.e., a magnetic field creating means movable in synchronism with the spot of the laser beam, on the other side of the magnetooptical disk 1, and changes the direction of magnetization by changing the direction of current flowing through the magnetic head 3. Thus, a magnetic field corresponding to a magnetic signal is created at a position corresponding to the spot of the laser beam, a desired position 1A on the magnetooptical disk 1 is heated to a temperature above the Curie temperature by the spot 2a of the laser beam to demagnetize the desired position 1A, and the desired position 1A is magnetized in the direction of the magnetic field for recording a signal after the position 1A has moved away from the spot 2a of the laser beam and the temperature of the position 1A has dropped below the Curie temperature.

The prior art magnetooptical disk 1 enables noncontact recording; the magnetooptical disk 1 and the magnetic head 3 are spaced by a predetermined gap and the magnetic head 3 is mounted on a electromagnetic servomechanism or the like to move the magnetic head 3 according to the wavy motion of the surface of the magnetooptical disk 1. The necessity of the electromagnetic servomechanism places restrictions on the reduction of power consumption, the miniaturization (particularly, the reduction of the thickness) and the reduction of weight of the recording/reproducing apparatus of a noncontact type capable of recording signals on the magnetooptical disk 1 and reproducing recorded signals from the same in a noncontact recording/reproducing mode.

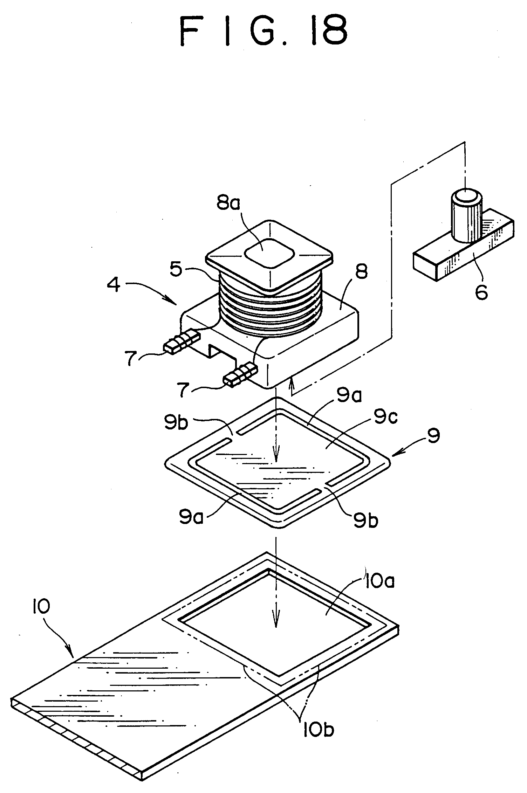

If a magnetic head of a contact type that slides in contact with the magnetooptical-disk is used instead of the magnetic head of a noncontact type, the magnetic head may be supported on a simple supporting structure and the electromagnetic servomechanism may be omitted, which is advantageous in reducing the power consumption, size and weight of the recording/reproducing apparatus. Fig. 18 shows a previously proposed magnetic head of a contact type for magnetooptical recording. This prior art magnetic head has a magnetic head unit 4 comprising a bobbin 8, a coil 5 formed on the bobbin 8 and a magnetic core 6 inserted in the bobbin 8, a gimbal plate 9 fixedly mounted with the bobbin 8, and a support member 10 fixedly holding the gimbal plate 9.

The bobbin 8 has a sliding surface 8a to be disposed opposite to a disk, formed in the upper end thereof, and terminals 7 combined integrally with the bobbin 8 by insert molding or the like. The opposite ends of the coil 5 are connected respectively to the terminals 7 and the magnetic core 6 is inserted in the bobbin 8 through the lower end of the latter. The gimbal plate 9 is formed of a metal plate and has two U-shaped slots 9a, narrow connecting portions 9b extending between the two slots 9a, and a supporting portion 9c for fixedly supporting the bobbin 8, demarcated by the two slots 9a and the narrow connecting portions 9b. The support member 10 serves as a carriage or a support arm member. A recess 10a is formed in one end of the support member 10, and the marine of the recess 10a serves as a supporting portion 10b. The magnetic head unit 4 is assembled by adhesively connecting the component parts; that is, the magnetic head unit 4 is assembled by forming the coil 5 on the bobbin 8, inserting the magnetic core 6 in the bobbin 8, adhesively fixing the backside of the bobbin 8 to the supporting portion 9c of the gimbal plate 9, and then adhesively fixing the gimbal plate 9 to the supporting portion 10b to support the magnetic head unit 4 elastically on the support member 10.

In assembling the prior art magnetic head of such a construction, a relatively large number of assembling steps are necessary and it is difficult to dispose the component parts in high positional accuracies, because the bobbin 8 needs to be fixed to the gimbal plate 9, and the gimbal plate 9 needs to be fixed to the support member 10. Moreover, since the component parts are fixedly joined together with an adhesive and the magnetic head has two adhesive joints, the reliability of the magnetic head is not high enough, it is difficult to automate the processes of assembling the magnetic head, and the manufacturing cost of the magnetic head is not necessarily low enough.

Furthermore, since the terminals 7 is combined with the bobbin 8 by insert molding and the positions and direction of projection of the terminals 7 are subject to restrictions relating to the formation of the bobbin 8, the magnetic head has a low degree of freedom of design.

### SUMMARY OF THE INVENTION

The present invention has been made in view of the foregoing problems in the prior art and it is therefore an object of the present invention to provide a magnetic head for magnetooptical recording, having a magnetic head unit elastically supported without using any gimbal plate, eliminating assembling steps for adhesively connecting the component parts to reduce the manufacturing cost, and having a large degree of design in determining the positions and direction of projection of the terminals, and to provide a method of such a magnetic head.

In a first aspect of the present invention, a magnetic head for magnetooptical recording comprises: a magnetic head unit comprising, as principal components, a bobbin, a coil formed on the bobbin, and a magnetic core inserted in the bobbin; and a support member formed of a metal plate and fixedly supporting the bobbin. The support member has a pair of parallel support arms between which the bobbin is disposed, and projections respectively projecting from the respective inner sides of the pair of parallel support arms so as to support the bobbin, and the support member and the bobbin are combined by insert molding with the projections of the support member fixedly connected to the bobbin so that the bobbin is supported elastically by the projections on the support member.

In a second aspect of the present invention, the support member of the magnetic head in the first aspect of the present invention is provided with terminals, to which the opposite ends of the coil are connected, formed by projecting respective portions of the pair of parallel support arms.

In a third aspect of the present invention, a method of manufacturing a magnetic head for magnetooptical recording comprises steps of: forming a support member having a pair of parallel support arms between which a bobbin is disposed, a bridge interconnecting the pair of parallel support arms, and projections respectively projecting from the respective inner sides of the pair of parallel support arms by processing a metal plate; forming a bobbin by insert molding in which the support member is placed in a mold to combine the bobbin and the support member; putting a coil and a magnetic core on the bobbin to complete a magnetic head unit; and cutting off the bridge to isolate the pair of parallel support arms electrically from each other.

In a fourth aspect of the present invention, a method of manufacturing a magnetic heads for magnetooptical recording comprises steps of: forming, by processing a metal plate, a plurality of pairs of parallel support arms, each pair of parallel support arms being provided with projections respectively projecting from the respective inner sides thereof, arranged at predetermined intervals and having base ends connected to a common connecting portion; forming bobbins by insert molding in which the plurality of pairs of parallel support arms are placed in a mold to combine the bobbins respectively with the plurality of pairs of parallel support arms so that the bobbins are disposed respectively between the pairs of parallel support arms; putting a coil and a magnetic core on each bobbin to complete a plurality of magnetic head units; and cutting the common connecting portion off the respective base ends of the plurality of parallel support arms.

In a fifth aspect of the present invention, a magnetic head for magnetooptical recording comprises: a magnetic head unit comprising, as principal components, a bobbin, a coil formed on the bobbin, and a magnetic core inserted in the bobbin; a gimbal for elastically holding the magnetic head unit; and a support member for supporting the magnetic head unit. The gimbal is an integral component of the support member.

In a sixth aspect of the present invention, a magnetic head for magnetooptical recording comprises: a magnetic head unit comprising, as principal components, a bobbin, a coil formed on the bobbin, and a magnetic core inserted in the bobbin; and a support member supporting the magnetic head unit. The support member comprises a pair of support arms, and a gimbal having opposite sides connected respectively to the respective inner sides of the pair of parallel support arms. The gimbal is provided with a pair of U-shaped slots extending along the periphery thereof, and the magnetic head unit is held elastically on the gimbal.

In a seventh aspect of the present invention, a method of manufacturing a magnetic head for magnetooptical recording comprises steps of: forming a support member having a pair of parallel support arms, and a gimbal for elastically supporting a magnetic head unit, disposed between the pair of parallel support arms and having opposite sides connected to the pair of parallel support arms; forming a magnetic head unit by assembling a bobbin, a coil and a magnetic core; and mounting the magnetic head unit on the gimbal.

In the magnetic head for magnetooptical recording in the first aspect of the present invention, the magnetic head unit is mounted on the projections projecting from the pair of parallel support arms, and the projections combined with the bobbin by insert molding have a narrow width. Accordingly, the projections is able to function as a gimbal plate to support the magnetic head unit elastically on the pair of parallel support arms.

Since the projections projecting from the pair of parallel support arms are combined with the bobbin by insert molding, the bobbin need not be connected adhesively to the support member. Accordingly, the magnetic head unit can be positioned accurately on the support member without requiring any additional process for adhesively connecting the bobbin to the support member.

The support member can be formed by pressing or etching in a desired shape and terminals can easily be formed integrally with the pair of parallel support arms. The positions and direction of projection of the terminals formed integrally with the pair of parallel support arms are not subject substantially to restrictions relating with the shape of the bobbin. Since the terminals have high degree of freedom of design, the terminals can be formed so as to facilitate soldering the opposite ends of the coil thereto.

The method of manufacturing a magnetic head for magnetooptical recording in a third aspect of the present invention forms a supporting member integrally having a pair of parallel support arms, projections respectively projecting from the respective inner sides of the pair of parallel support arms, and a bridge interconnecting the pair of parallel support arms, combines the support member with a bobbin by insert molding, and then cuts the bridge off the pair of parallel support arms to separate the support arms from each other. This method is advantageous over a method which forms the pair of parallel support arms separately in fabricating the support member, handling the support member and facility and accuracy of setting the support member in a mold when combining the same with a bobbin by insert molding.

The method of manufacturing a magnetic head for magnetooptical recording in the fourth aspect of the present invention forms a plurality of pairs of parallel support arms having base ends connected by a common connecting portion, combines the plurality of pairs parallel support arms respectively with bobbins by insert molding, and then the plurality of pairs of support arms combined respectively with the bobbins are separated from the common connecting portion. Thus, the method is capable of simultaneously producing a plurality of magnetic heads and of enhancing the productivity of a production line for manufacturing magnetic heads for magnetooptical recording.

The magnetic head for magnetooptical recording in the fifth embodiment according to the present invention employs a support member formed by processing a metal plate and integrally having a gimbal for elastically holding a magnetic head unit. Accordingly, the magnetic head eliminates work for adhesively connecting the gimbal to the support member, which improves the assembling accuracy of the magnetic head and reduces work for assembling the magnetic head. Since the gimbal is provided with two U-shaped slots, accidental shocks applied to the magnetic head unit can be absorbed by the gimbal elastically holding the magnetic head unit.

### BRIEF DESCRIPTION OF THE DRAWINGS

The above and other objects, features and advantages of the present invention will become more apparent from the following description taken in connection with the accompanying drawings, in which:
Fig. 1 is a perspective view of a magnetic head for magnetooptical recording in a first embodiment according to the present invention;
Fig. 2 is a perspective view of a support member included in the magnetic head of Fig. 1;
Fig. 3 is a perspective view of a support member and a bobbin included in the magnetic head of Fig. 1 combined by insert molding;
Fig. 4 is a perspective view of assistance in explaining a step of inserting a magnetic core in the bobbin of Fig. 3 combined with the support member;
Fig. 5 is a perspective view of a support member in a modification of the support member of the magnetic head of Fig. 1;
Fig. 6 is a perspective view of a support member included in a magnetic head for magnetooptical recording in a second embodiment according to the present invention;
Fig. 7 is a perspective view of an assembly of the support member of Fig. 6 and a bobbin combined by insert molding;
Fig. 8 is a perspective view of a support member included in a magnetic head for magnetooptical recording in a third embodiment according to the present invention;
Fig. 9 is a perspective view of an assembly of the support member of Fig. 8 and a bobbin combined by insert molding;
Fig. 10 is a perspective view of the bobbin of Fig. 9 mounted with a coil;
Fig. 11 is a perspective view of the bobbin of Fig. 9 in which a magnetic core is inserted;
Fig. 12 is a perspective view of an assembly of a support member in a modification of the support member of Fig. 8;
Fig. 13 is a perspective view of an assembly of the support member of Fig. 12 and a bobbin combined by insert molding;
Fig. 14 is a perspective view of a magnetic head for magnetooptical recording in a fourth embodiment according to the present invention;
Fig. 15 is an exploded perspective view of the magnetic head of Fig. 14;
Fig. 16 is an exploded perspective view of a support member in a modification of the support member of the magnetic head of Fig. 14;
Fig. 17 is a diagrammatic view of assistance in explaining a magnetooptical recording system of a magnetic modulation type; and
Fig. 18 is an exploded perspective view of a prior art magnetic head for magnetooptical recording.

### DESCRIPTION OF THE PREFERRED EMBODIMENTS

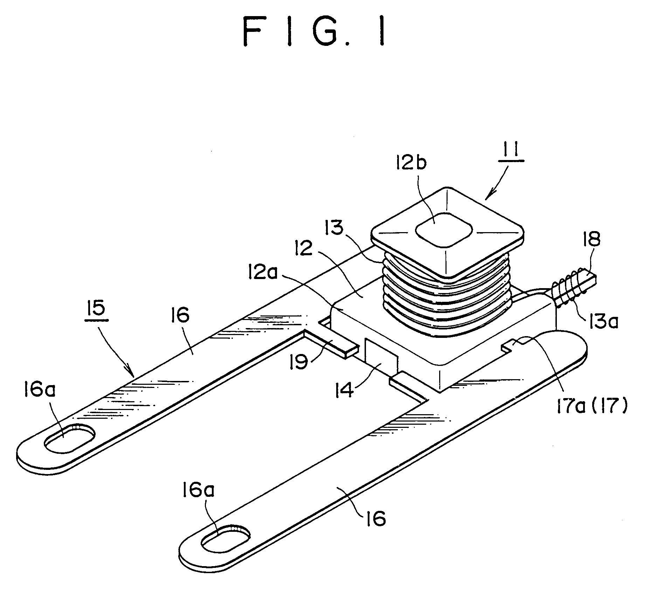

The construction of a magnetic head in a first embodiment according to the present invention will be described in detail through the explanation of a method of manufacturing a magnetic head for magnetooptical recording with reference to Figs. 1 to 4.

### First Embodiment

Referring to Fig. 1, the magnetic head has a magnetic head unit 11 comprising, as principal components, a bobbin 12, a coil 13 formed on the bobbin, and a magnetic core 14 inserted in the bobbin 12, and a support member 15 having a pair of parallel support arms 16 elastically holding the magnetic head unit 11.

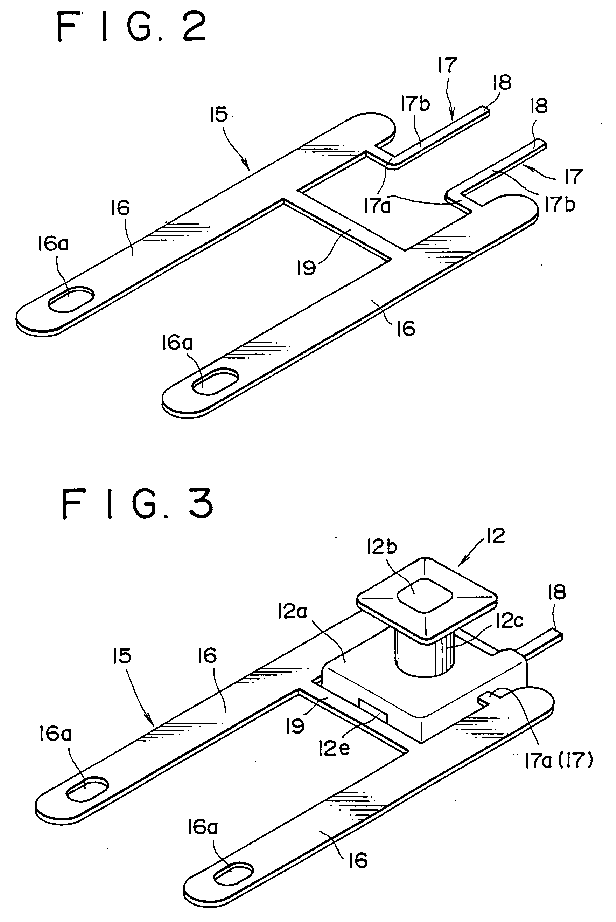

The support member 15 is formed by pressing or etching a metal plate and, as shown in Fig. 2, has the pair of parallel support arms 16, a pair of projections 17 having a shape resembling the letter L and respectively projecting from the respective inner sides of the pair of parallel support arms 16, and a bridge 19 connecting the pair of parallel support arms 16. The distance between the parallel support arms 16 or the length of the bridge 19 is slightly greater than the width of the bobbin 12. The projections 17 at a predetermined distance from the bridge 19. The projections 17 have lateral portions 17a laterally projecting toward each other from the corresponding support arms 16, and longitudinal portions 17b longitudinally extending, namely, extending in parallel to the support arms 16, from the extremities of the lateral portions 17a beyond the ends of the support arms 16, respectively. The free ends of the longitudinal portions 17b serve as terminals 18 to be connected to the coil 13.

The support member 15 serves as a carriage or a support arm member. When necessary, slots 16a to be used for connecting or fixing the support member 15 to an external device are formed in the other ends of the support arms 16. Preferably, the support member 15 is formed by pressing or etching an elastic metal plate, such as a phosphor bronze plate or a nickel silver plate, of 0.5 mm or below in thickness.

The support member 15 is combined with the bobbin by insert molding, in which portions of the projections 17 of the support member 15 are placed in a mold and a heated and molten plastic is injected into the mold by a high pressure. Thus, the portions of the projections 17 are buried in the lower flange 12a of the bobbin 12 as shown in Fig. 3. The bobbin 12 is provided in its upper flange with a sliding portion 12b to be disposed opposite to a magnetooptical disk. A cylinder 12c extends between the upper flange and the lower flange 12a. A groove 12e for receiving the magnetic core 14 is formed in the lower surface of the lower flange 12a. The bobbin 12 is formed, for example of a polyacetal engineering plastic having high moldability and excellent self-lubricating property.

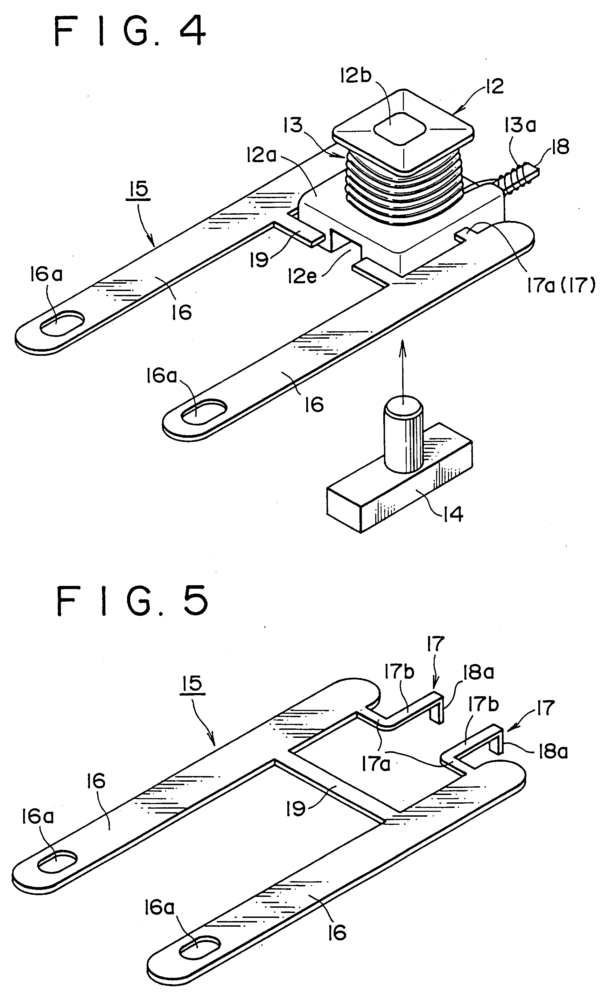

The assembly of the support member 15 and the bobbin 12 elastically supported between the parallel support arms 16 is delivered to an assembling process. Then, as shown in Fig. 4, the coil 13 of a predetermined number of turns is wound around the cylinder 12c of the bobbin 12 by an automatic coil winding machine and the ends 13a of the coil 13 are wound around the terminals 18 projecting from one side surface of the lower flange 12a. Then, the magnetic core 14 is fitted in the groove 12e with the cylindrical portion thereof inserted in the bore of the cylinder 12c. Then, the bridge 19 is cut off the parallel support arms 16 by pressing or laser beam cutting, so that the support arms 16 are disconnected electrically from each other and the terminals 18 are disconnected electrically from each other to complete the magnetic head. The coil winding work, the core mounting work and the bridge cutting work may be carried out in any order; for example, the coil winding work and the core mounting work may be carried out after cutting off the bridge 19.

In the magnetic head thus completed, the magnetic head 11 is disposed between the pair of parallel support arms 16 of the support member 15 and held elastically by the projections 17. The mode of elastic movement of the magnetic head unit 11 elastically held by this holding structure can easily be changed by changing the shape and width of the projections and the size of gaps between the lower flange 12a and the support arms 16. Thus, the function of the holding structure for elastically holding the magnetic head unit 11 is equivalent to that of the gimbal plate employed in the prior art magnetic head. The number of components of the magnetic head in the first embodiment is smaller than that of the components of the prior art magnetic head employing the gimbal plate, and hence it is possible to manufacture the magnetic head at a manufacturing cost lower than that of the prior art magnetic head. Moreover, since the bobbin 12 and the support member 15 are combined by insert molding, troublesome work for adhesively joining together the bobbin 12 and the support member 15 is unnecessary and the bobbin 12 and the support member 15 can be combined in a high accuracy.

Fig. 5 shows a support member 15 in a modification of the support member 15 shown in Fig. 1, having projections 17 different in shape from those of the projections 17 of the support member 15 shown in Fig. 1. As shown in Fig. 5, each projection 17 has a lateral portion 17a, a longitudinal portion 17b longitudinally extending from the extremity of the lateral portion 17a, and a terminal portion 18a formed by bending down the free end of the longitudinal portion 17b. The opposite ends of a coil are wound respectively around the terminal portion 18a.

### Second Embodiment

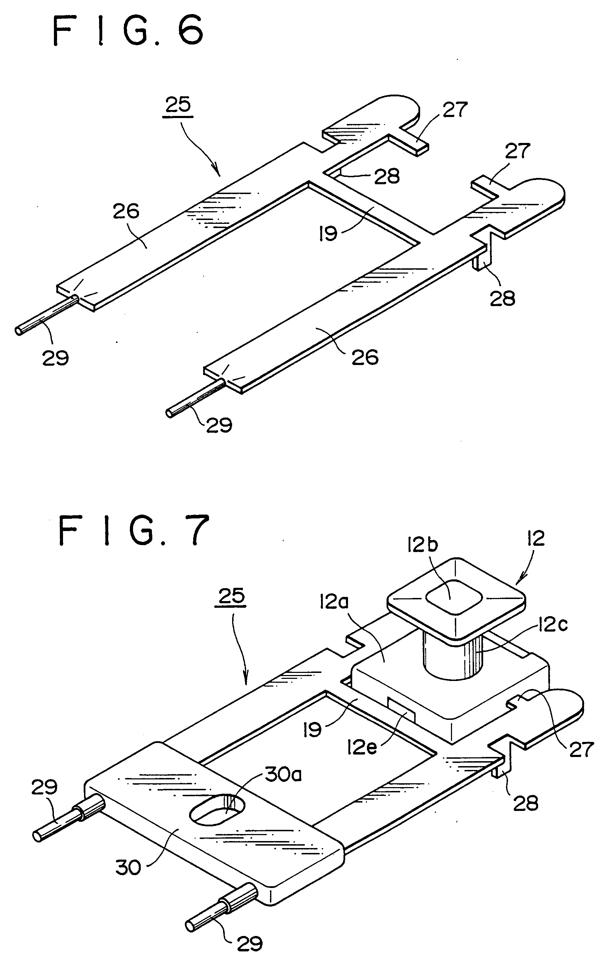

A magnetic head for magnetooptical recording in a second embodiment according to the present invention is shown in Figs. 6 and 7, in which parts like or corresponding to those of the magnetic head in the first embodiment are denoted by the same reference characters. Referring to Fig. 6, a support member 25 formed by pressing or etching a metal plate has a pair of parallel support arms 26, projections 27 respectively projecting from the respective inner sides of the pair of parallel support arms 26 toward each other, terminals 28 each formed by bending a portion of the outer side of the support arm 26, a bridge 19 connecting the pair of parallel support arms 26, and pin contacts 29 to be inserted in socket contacts, not shown, each projecting from one end of the support arm 26. The bridge 19 is separated longitudinally from the projections 27 by a predetermined distance. Each terminal 28 is formed substantially at the middle between the projection 27 and the bridge 19.

The support member 25, similarly to the support member 15 employed in the first embodiment, is combined with a bobbin 12 by insert molding, in which the projections 27 are buried in the lower flange 12a of the bobbin 12. A connecting member 30 provided with a slot 30a to be used for fastening the magnetic head to a recording/reproducing apparatus is attached to portions of the pair of parallel support arms 26 near the pin contacts 29 to connect the pair of parallel support arms 26. Since the terminals 28 project downward from the support arms 26 of the support member 25, the positions of the terminals 28 can relatively freely be determined without depending on the shape of the bobbin 12 and the length of the support member 25 is relatively small. Since the support member 25 is provided integrally with the pin contacts 29 and the connecting member 30, the magnetic head can readily be connected electrically and mechanically to a recording/reproducing apparatus.

### Third Embodiment

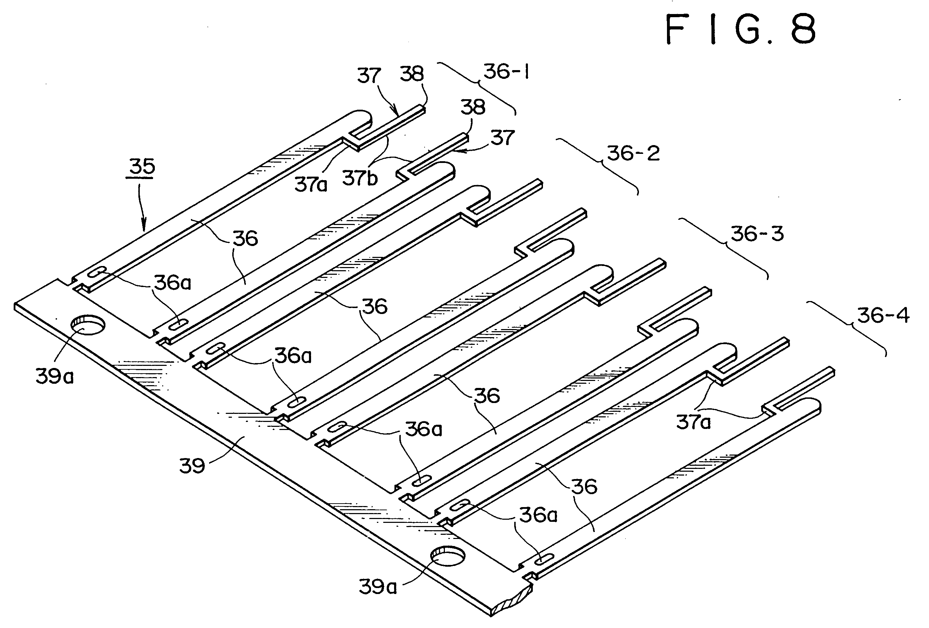

Figs. 8 to 11 show steps of a method of simultaneously manufacturing a plurality of magnetic heads for magnetooptical recording in a third embodiment according to the present invention. As shown in Fig. 8, a plurality of support members 35 respectively having a plurality of pairs, in this embodiment, four pairs 36-1, 36-2, 36-3 and 36-4, of parallel support arms 36 are formed at predetermined intervals by pressing or etching a metal plate. The pairs 36-1, 36-2, 36-3 and 36-4 of parallel support arms 36 are connected to a common bridge 39. Each support arm 36 is provided with a slot 36a to be used for connecting a magnetic head to a recording/reproducing apparatus near the bridge 39, and a projection 37 projecting from the inner side thereof. The projection 37 has a lateral portion 37a laterally projecting from the inner side of the support arm 36, and a longitudinal portion 37b longitudinally extending from the extremity of the lateral portion 37a. The free end of the longitudinal portion 37b serves as a terminal 38. The bridge 39 is provided with two positioning slots 39a separated from each other by a predetermined distance.

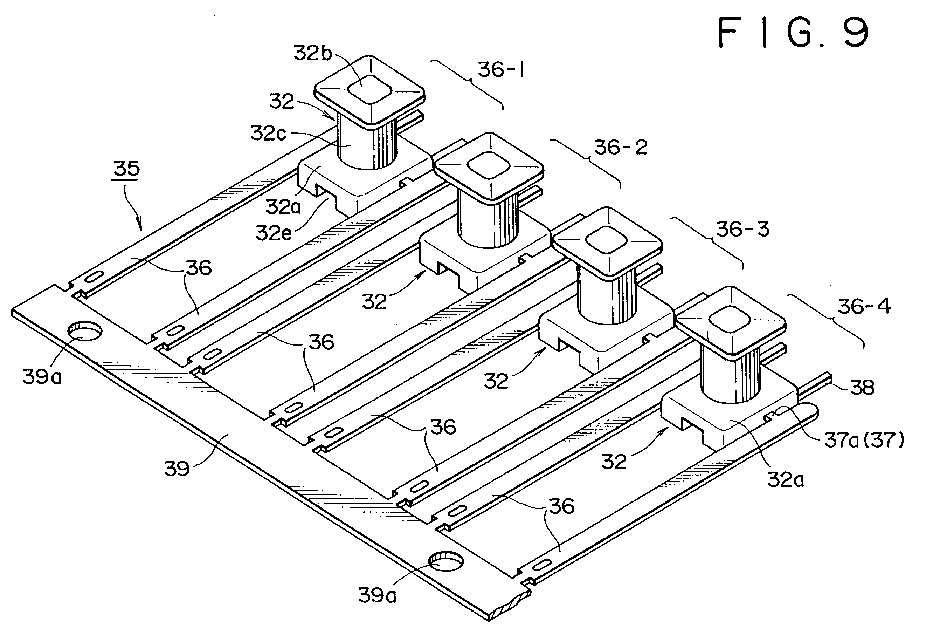

As shown in Fig. 9, the pairs 36-1, 36-2, 36-3 and 36-4 of parallel support arms 36 are combined simultaneously with bobbins 32, respectively, by insert molding. Portions of the projections 37 are buried in the lower flanges 32a of the corresponding bobbins 32, respectively. Each bobbin 32 is provided in its upper flange with a sliding portion 32b to be disposed opposite to a magnetooptical disk. The bobbin 32 has a cylinder 32c extending between the lower flange 32a and an upper flange. A groove 32e for receiving a magnetic core 34 is formed in the lower surface of the lower flange 32a.

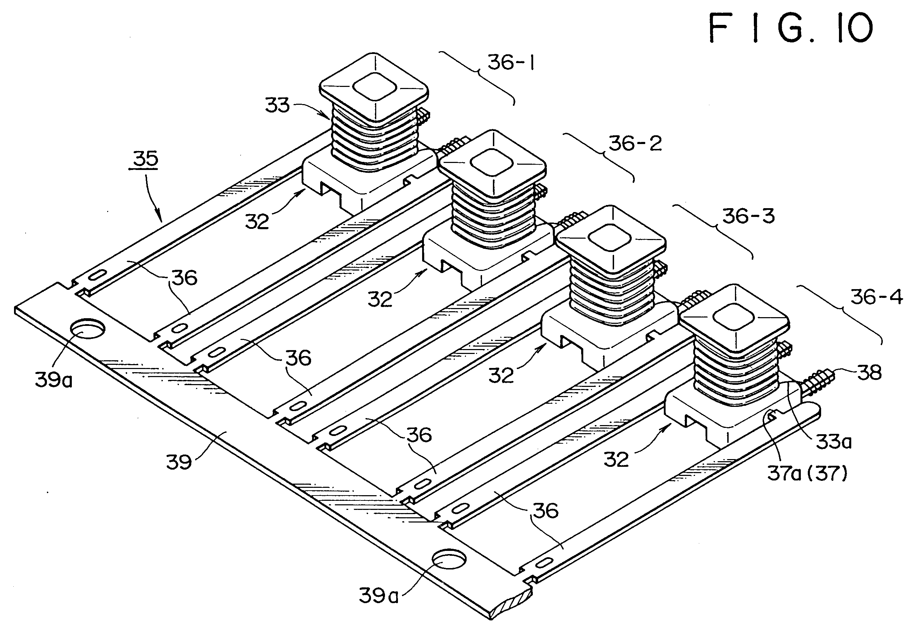

As shown in Fig. 10, coils 33 are wound respectively around the cylinders 32c of the bobbins 32. Each coil 33 is formed by winding a wire by a predetermined number of turns around the cylinder 32c by an automatic winding machine of a flyer type. The ends 33a of the coil 33 are wound around the terminals 38 projecting from one side of the lower flange 32a. The positioning slots 39a formed in the bridge 39 are used in positioning the pairs 36-1, 36-2, 36-3 and 36-4 of parallel support arms 36 when subjecting the support members to insert molding and coil winding.

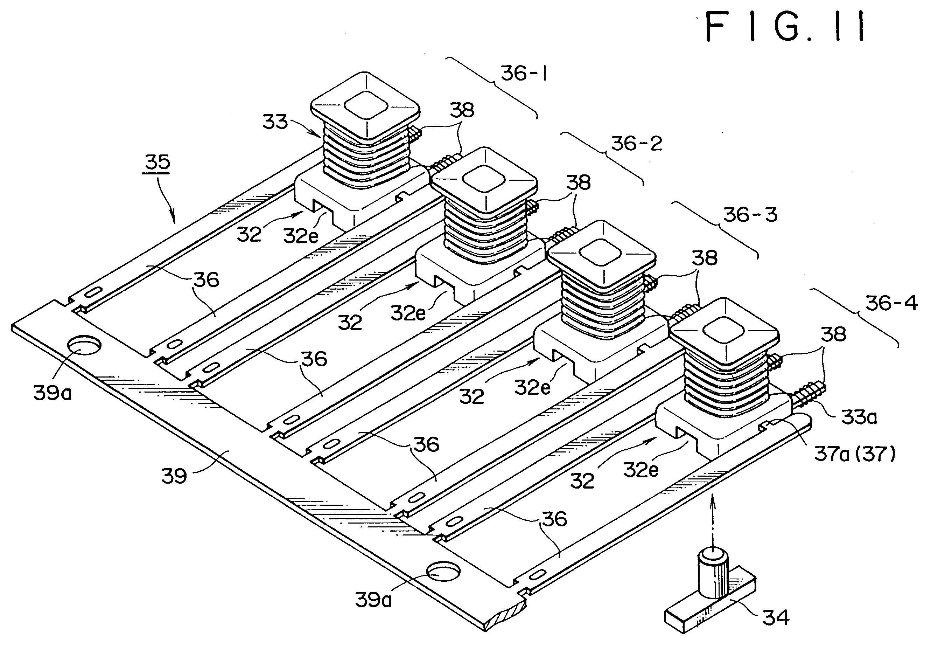

Then, as shown in Fig. 11, the magnetic cores 34 are fitted in the grooves 32e of the bobbins 32, respectively, and then the bridge 39 is cut off the pairs 36-1, 26-2, 36-3 and 36-4 of parallel support arms 36 by laser cutting or the like to complete four separate magnetic heads simultaneously.

Thus, the plurality of support members 35 can simultaneously and efficiently be handled for conveyance, positioning for insert molding in the die, removal from the die after insert molding, positioning for coil winding on the automatic winding machine and positioning for attaching the magnetic cores to the bobbins. Accordingly, the manufacturing cost of the magnetic head in the third embodiment is lower than that of the magnetic heads in the first and second embodiment which are manufactured individually. The bridge 39 connecting the plurality of pairs of parallel support arms 36 facilitates handling the plurality of pairs of parallel support arms 36, prevents making the support arms and the parts combined with the support arms dirty and damaging the support arms 36 and the parts combined with the support arms 36 during the processes, improves the yield of the manufacturing process and facilitates the automation of the manufacturing process.

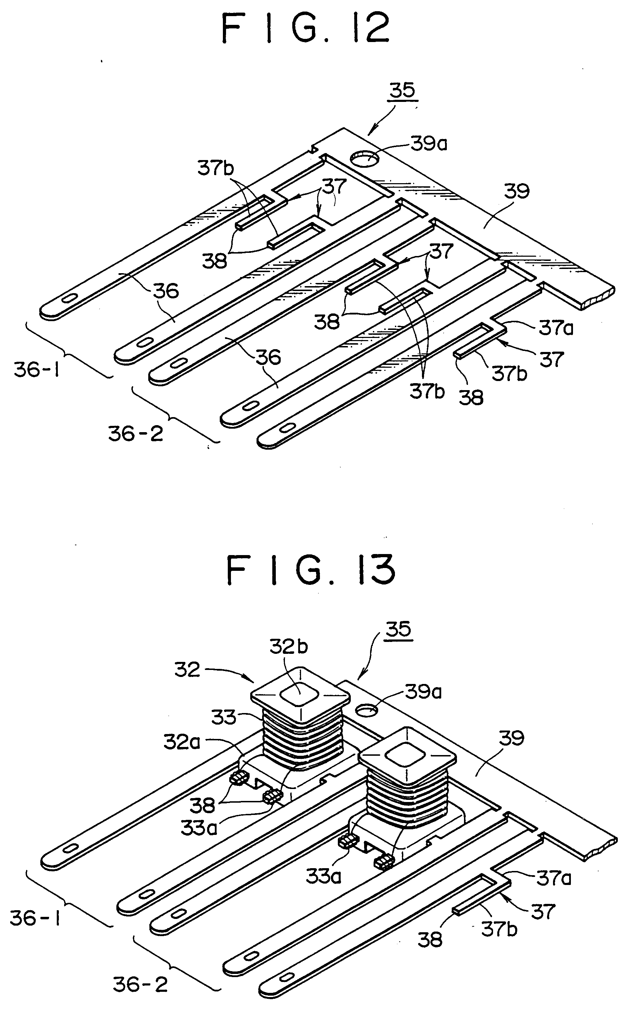

Figs. 12 and 13 show support members 35 in a modification of the support member 35 in the third embodiment. The support members 35 shown in Figs. 12 and 13 are manufactured by the substantially same method as that of manufacturing the support members 35 in the third embodiment. Referring to Figs. 12 and 13, the plurality of support members 35 respectively having a plurality of pairs, in this embodiment, four pairs 36-1, 36-2, 36-3 and 36-4, of parallel support arms 36 are arranged at predetermined intervals and one end of each support arm 36 is connected to a connecting bridge 39. Each support arm 36 has a projection 37 near one end thereof connected to the connecting bridge 39. The bridge 37 has a lateral portion 37a laterally projecting from the inner side of the support arm 36, a longitudinal portion 37b longitudinally extending from the extremity of the lateral portion 37a in a direction away from the end of the support arm 36 connected to the connecting bridge 39. The free end of the longitudinal portion 37b serves as a terminal 38. The connection of the ends of the support arms on which bobbins 32 are to be mounted by the connecting bridge 39 suppresses the bending of the support arms 36 in the insert molding process and the coil winding process. Since the longitudinal portion 37b of the projection 37 is extended in a direction away from the end of the support arm 36 connected to the connecting bridge 39, the length of the support member 35 is smaller than that of the support members 35 in the first, second and third embodiments. The support members 35 shown in Fig. 12 are combined respectively with bobbins 32 by insert molding, coils 33 are formed respectively on the bobbin 32, magnetic cores are attached respectively to the bobbins 32, and then the connecting bridge 39 is cut off the support arms 36 to complete a plurality of magnetic heads simultaneously.

### Fourth Embodiment

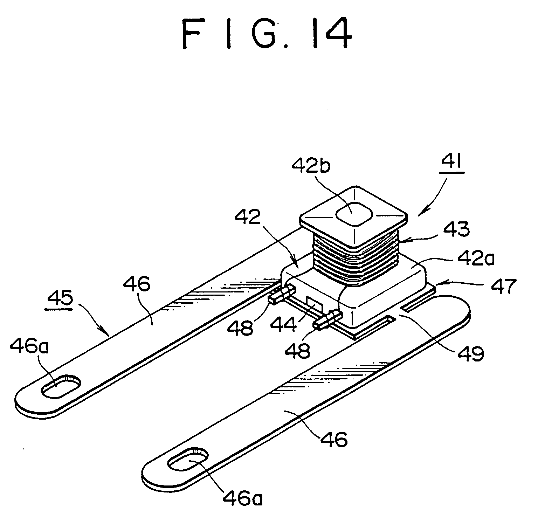

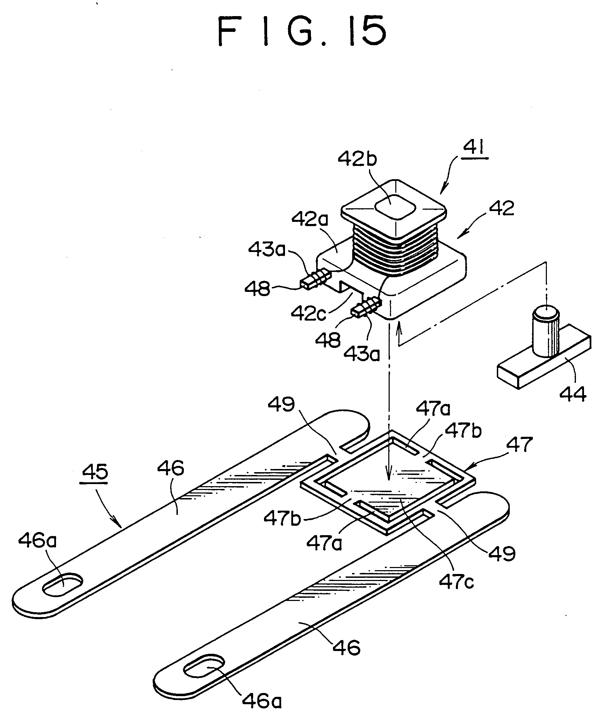

Figs. 14 and 15 show a magnetic head for magnetooptical recording in a fourth embodiment according to the present invention comprising a magnetic head unit 41 comprising a bobbin 42, a coil 43 formed on the bobbin 42 and a magnetic core 44 inserted in the bobbin 42, a support member 45 integrally having a pair of parallel support arms 46, and a gimbal 47 disposed between and supported by the pair of parallel support arms 46.

The bobbin 42 has an upper flange provided with a sliding portion 42b to be disposed opposite to a magnetooptical disk, and a cylinder extending between the upper flange and a lower flange 42a. A groove 42c for receiving the magnetic core 44 is formed in the lower surface of the lower flange 42a. Terminals 48 to be connected to the coil 43 are combined with the bobbin 42 by insert molding so as to project from one side of the lower flange 42a.

The coil 43 is formed on the bobbin 42 and the magnetic core 44 is attached to the bobbin 42 to complete the magnetic head unit 41. The coil 43 is formed by winding a wire by a predetermined number of turns around the cylinder of the bobbin 42 by an automatic coil winding machine. The opposite ends 43a of the coil 43 are wound respectively around the terminals 48. The magnetic core 44 is fitted in the groove 42c formed in the lower surface of the lower flange 42a with its cylindrical portion inserted in the bore of the bobbin 42. The bobbin 42 is formed of the same material as that forming the bobbin 12 of the first embodiment.

The support member 45 is formed by pressing or etching a metal plate. The gimbal 47 has a central portion 47c having a size large enough to hold the bobbin 42 thereon, demarcated by two U-shaped slots 47a extending along the periphery of the gimbal 47 in a symmetrical arrangement. A pair of narrow pivotal portion 47b are formed between the two U-shaped slots 47a to connect the central portion 48c to the peripheral portion of the gimbal 47. The gimbal 47 is connected by a pair of pivotal portions 49 to the pair of parallel support arms 46. The bobbin 42 of the magnetic head unit 41 is seated in place on the central portion 47c of the gimbal 47, and is adhesively fixed to the central portion 47c to complete a magnetic head for magnetooptical recording.

The support member 45 serves as a carriage or a support arm member. If necessary, each of the pair of parallel support arms 46 is provided near one end thereof with a slot 46a to be used for connecting the support member 45 to another device. The support member 45 is formed of the same material as that forming the support member 15 of the first embodiment.

The magnetic head unit 41 of the magnetic head is supported elastically on the gimbal 47 connected by the pivotal portions 49 to the pair or parallel support arms 46 of the support member 45. The mode of elastic movement of the magnetic head unit 41 can easily be changed by changing the shape, the width and the length of the pivotal portion 49. Thus, the function of the gimbal 47 is equivalent to that of the gimbal plate of the prior art magnetic head. Since the support member 45 has the component parts formed in an integral unit, the number of the individual components of the magnetic head is smaller than that of the individual components of the prior art magnetic head and hence the manufacturing cost of the magnetic head is lower than that of the prior art magnetic head. Since the gimbal 47 is formed integrally with the pair of parallel support arms 46, troublesome work for adhesively connecting the gimbal 47 to the pair of parallel support arms 46 is omitted and the support member 45 can be formed in a high accuracy.

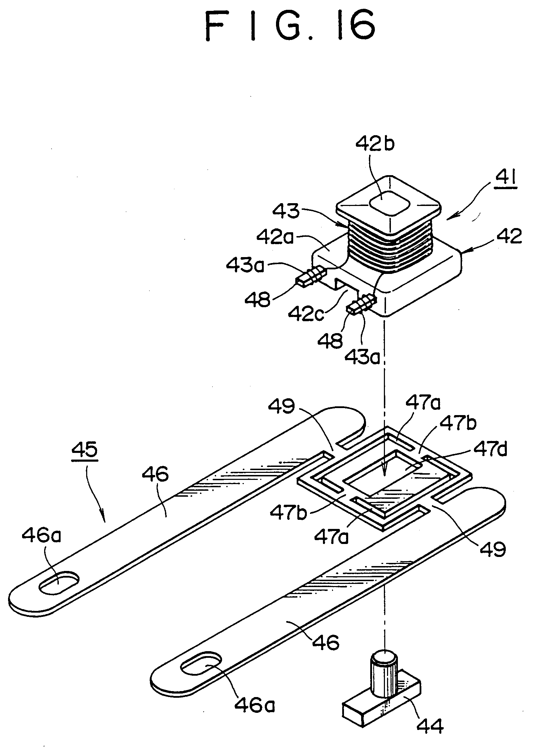

A support member 45 shown in Fig. 16 is a modification of the support member 45 of the fourth embodiment shown in Fig. 15. The support member 45 shown in Fig. 16 has, as an integral component, a gimbal 47 having a central portion 47c provided with an opening 47d of a size large enough to insert a magnetic core 44 therethrough in a bobbin 42 seated on the central portion 47c of the gimbal 47. The opening 47d enables the insertion of the magnetic core 44 in the bobbin 42 of a magnetic head unit 41 after fixing the bobbin 42 to the central portion 47c of the gimbal 47.

Although the invention has been described in its preferred forms with a certain degree of particularity, obviously many changes and variations are possible therein. It is therefore to be understood that the present invention may be practiced otherwise than as specifically described herein without departing from the scope and spirit thereof.

## Claims

1. A magnetic head for magnetooptical recording comprising:
a magnetic head unit (11) comprising, as principal components, a bobbin (12), a coil (13) formed on the bobbin and a magnetic core (14) inserted in the bobbin; and
a support member (15) formed by processing a metal plate;
wherein the support member (15) has, in an integral unit, a pair of parallel support arms (16) and a pair of projections (17) projecting toward each other respectively from the inner sides of the pair of parallel support arms (16), and the support member (15) and the bobbin (12) are combined by insert molding with the projections (17) buried in the bobbin (12) to support the bobbin elastically by the projections (17) between the pair of parallel support arms (16).

2. The magnetic head for magnetooptical recording according to claim 1, wherein said support member (15) is provided with terminals (18) formed by bending a portion of the pair of parallel support arms, around which the opposite ends of the wire forming the coil are wound, respectively.

3. A method of manufacturing a magnetic head for magnetooptical recording, comprising steps of:
forming a support member having, in an integral unit, a pair of parallel support arms, a bridge connecting the pair of parallel support arms, and projections projecting toward each other respectively from the inner sides of the pair of parallel support arms, by processing a metal plate;
combining the support member and a bobbin by insert molding;
forming a coil on the bobbin;
attaching a magnetic core to the bobbin; and cutting the bridge off the pair of parallel support arms to disconnect the pair of parallel support arms electrically from each other to complete the magnetic head.

4. A method of manufacturing a magnetic head for magnetooptical recording, comprising steps of:
forming a structure integrally having a plurality of support members arranged at predetermined intervals, having base ends connected to a common connecting bridge and each having a pair of parallel support arms and a pair of projections respectively projecting toward each other from the respective inner sides of the pair of parallel support arms, by processing a metal plate;
combining the plurality of pairs of support members respectively with bobbins by insert molding so that the projections are buried in the bobbins;
forming coils respectively on the bobbins;
attaching magnetic cores respectively to the bobbins to complete a plurality of magnetic head units; and
cutting the common connecting bridge off the base ends of the plurality of parallel support arms to obtain a plurality of individual magnetic heads.

5. A magnetic head for magnetooptical recording comprising:
a magnetic head unit comprising a bobbin, a coil formed on the bobbin, and a magnetic core inserted in the bobbin;
a gimbal for elastically holding the magnetic head unit; and
a support member having a pair of parallel support arms;
wherein the gimbal and the support member are formed in an integral unit by processing a metal plate.

6. The magnetic head for magnetooptical recording according to claim 5, wherein the gimbal is connected pivotally to the pair of parallel support arms by a pair of pivotal portions projecting toward each other respectively from the inner sides of the pair of parallel support arms.

7. The magnetic head for magnetooptical recording according to claim 6, wherein said gimbal is provided with two U-shaped slots arranged symmetrically so as to extend along the periphery thereof.

8. A magnetic head for magnetooptical recording according to claim 6, wherein said magnetic head unit is held on said gimbal for elastic movement.

9. A method of manufacturing a magnetic head for magnetooptical recording, comprising steps of:
forming a support member comprising, in an integral unit, a pair of parallel support arms, and a gimbal disposed between the pair of parallel support arms and pivotally connected to the respective inner sides of the pair of parallel support arms by pivotal portions projecting respectively from the inner sides of the pair of parallel support arms;
forming a magnetic head unit by assembling a bobbin, a coil and a magnetic core; and
mounting the magnetic head unit on the gimbal of the support member.
